(19) Europäisches Patentamt
European Patent Office
Office européen des brevets

(11) **EP 4 582 607 A1**

(12) **EUROPEAN PATENT APPLICATION**
published in accordance with Art. 153(4) EPC

(43) Date of publication:
**09.07.2025 Bulletin 2025/28**

(51) International Patent Classification (IPC):
*D04H 1/4234* (2012.01)     *C25B 11/031* (2021.01)
*C25B 11/042* (2021.01)     *C25B 11/046* (2021.01)

(21) Application number: **23860327.8**

(52) Cooperative Patent Classification (CPC):
**C25B 11/031; C25B 11/042; C25B 11/046;
D04H 1/4234**

(22) Date of filing: **29.08.2023**

(86) International application number:
**PCT/JP2023/031176**

(87) International publication number:
**WO 2024/048565 (07.03.2024 Gazette 2024/10)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.08.2022 JP 2022137340**

(71) Applicant: **Mitsui Mining & Smelting Co., Ltd.
Shinagawa-ku
Tokyo 141-8584 (JP)**

(72) Inventors:
• **KOMODA, Yasuo
Ageo-shi, Saitama 362-0021 (JP)**
• **SHIBATA, Yasuhiro
Ageo-shi, Saitama 362-0021 (JP)**

(74) Representative: **Novagraaf Technologies
Bâtiment O2
2, rue Sarah Bernhardt
CS90017
92665 Asnières-sur-Seine Cedex (FR)**

(54) **METAL NONWOVEN FABRIC AND ELECTRODE COMPRISING SAME**

(57) A metal nonwoven fabric according to the present invention contains a metal fiber and has liquid permeability. The metal fiber has an average fiber diameter of 20 nm or more and 10 $\mu$m or less. The metal nonwoven fabric has a void distribution peak top diameter measured according to mercury porosimetry of 30 $\mu$m or less. In the metal nonwoven fabric, the void distribution peak top diameter measured according to mercury porosimetry is preferably 0.01 $\mu$m or more. Where a length of a crystal of a metal that constitutes the metal fiber in an extension direction of the metal fiber is represented by X and a length of the crystal in a direction perpendicular to the extension direction of the metal fiber is represented by Y, an arithmetic average value of values of a ratio X/Y of crystals that are present at three boundary regions formed by dividing a length of the metal fiber that constitutes the metal nonwoven fabric into four equal parts in the extension direction of the metal fiber is preferably 4 or less, the ratio X/Y being a ratio of the length X relative to the length Y.

EP 4 582 607 A1

## Description

Technical Field

The present invention relates to a metal nonwoven fabric and an electrode formed using the same.

Background Art

A fine metal fiber with a diameter of about several tens nm to several tens $\mu$m is known. Such a fine metal fiber is expected to, due to having a fine diameter, a high aspect ratio, and the like, exhibit physical and chemical properties (for example, electric conductivity, thermal conductivity, light emitting properties, catalytic activity, and the like) not found in conventional materials. As conventional techniques related to the use of metal fibers, for example, the techniques disclosed in Patent Literature 1 and Non-Patent Literature 1 are known.

Patent Literature 1 discloses a porous electrode that includes a Cu nanowire produced by causing an aqueous solution of sodium hydroxide, an aqueous solution of copper nitrate, an aqueous solution of ethylene diamine, and an aqueous solution of $\alpha$-D-glucose to react, and heating the resulting solution. Patent Literature 1 also discloses that the porous electrode has a surface area larger than carbon paper, and exhibits low electrical resistivity.

Non-Patent Literature 1 discloses that an electrode formed using a nickel microfiber porous felt is used in alkaline water electrolysis. Non-Patent Literature 1 also discloses that, due to the electrode having a high surface area, oxygen bubbles generated by the alkaline water electrolysis easily escape from the electrode, and thus the counter electrode has an improved hydrogen production rate.

Citation List

Patent Literature

Patent Literature 1: US 2019/0305322A1

Non-Patent Literature

Non-Patent Literature 1: F. Yang, et al., Adv. Energy Mater, 2020, 10, 20011174

Summary of Invention

The techniques disclosed in Patent Literature 1 and Non-Patent Literature 1 are based on the fact that the metal fiber has a fine diameter, and, for this reason, they provide electrodes with a large surface area. In some cases, the metal fiber is required to have liquid permeability to exhibit physical and chemical properties when in use. However, Patent Literature 1 and Non-Patent Literature 1 are silent on that. To address this, the inventors of the present application conducted in-depth studies on the use of metal fibers, and found that, when a metal nonwoven fabric is produced to have predetermined voids using a metal fiber, a liquid efficiently permeates into the metal nonwoven fabric to cause a reactant in the liquid permeated into the voids to efficiently reach the surface of the metal fiber, and thus desired physical and chemical properties can be easily utilized.

Specifically, the present invention provides a metal nonwoven fabric that contains a metal fiber and has liquid permeability, wherein the metal fiber has an average fiber diameter of 20 nm or more and 10 $\mu$m or less, and the metal nonwoven fabric has a void distribution peak top diameter measured according to mercury porosimetry of 30 $\mu$m or less.

Description of Embodiments

Hereinafter, the present invention will be described based on a preferred embodiment of the present invention. The present invention relates to a metal nonwoven fabric. The metal nonwoven fabric according to the present invention contains a metal fiber made of a metal. In the following description, the term "metal fiber" may refer to either a single fiber or a collection of a plurality of fibers depending on the context.

The metal nonwoven fabric is a sheet-like fiber assembly composed mainly of a metal fiber. In the specification of the present application, the expression "composed mainly of a metal fiber" refers to a state in which the metal nonwoven fabric contains 50 mass% or more of metal fiber. The metal nonwoven fabric may contain, in addition to the metal fiber, for example, another constituent material such as an organic fiber, a carbon fiber, or an oxide fiber. The metal nonwoven fabric may also contain a substance in a form other than fibrous form. Accordingly, the metal nonwoven fabric may be a sheet-like fiber assembly that contains a plurality of constituent materials including a metal fiber. Of course, it is desirable that the metal nonwoven fabric is formed substantially only of a metal fiber, from the viewpoint of maximizing the advantageous effects inherent to the metal nonwoven fabric. In the specification of the present application, the expression "formed substantially only of a metal fiber" intends to exclude that a component other than the metal fiber is intentionally added to the metal nonwoven fabric, and allow a minor component inevitably contained in the metal nonwoven fabric during production process.

The metal nonwoven fabric may composed of a single type of metal fiber or a plurality of different types of metal fibers including a first metal fiber made of a first metal and a second metal fiber made of a second metal.

The metal nonwoven fabric retains its fabric form as a result of the metal fiber that constitutes the metal nonwoven fabric being randomly deposited, and bound by being entangled and/or fused, or the like. In the metal nonwoven fabric, as a result of the metal fiber that constitutes the metal nonwoven fabric being randomly deposited, a plurality of voids are continuously formed between a plurality of fibers in the thickness direction of the metal nonwoven fabric and other directions. With this configuration, the metal nonwoven fabric has liquid permeability in the thickness direction and other directions.

The metal nonwoven fabric may be a single layer structure or a stack structure in which a plurality of layers are stacked and integrated together. In the case where the metal nonwoven fabric has a stack structure, the layers included in the stack structure may be the same or different. The term "same" as used herein means that the metal fibers that constitute the metal nonwoven fabric are the same. The metal nonwoven fabric can be produced preferably using, for example, a production method described below.

The metal nonwoven fabric preferably has liquid permeability as a whole. The liquid permeability of the metal nonwoven fabric is exhibited mainly by fine voids of the metal nonwoven fabric. The level of liquid permeability of the metal nonwoven fabric is adjusted as appropriate according to the application of the metal nonwoven fabric. The liquid permeability of the metal nonwoven fabric can be improved by, as will be described later, for example, adjusting the average fiber diameter of the metal fiber contained in the metal nonwoven fabric and the size of voids in the metal nonwoven fabric.

Liquid permeability is caused by capillary action, and theoretically it is determined based on void diameter, physical and chemical surface state of material that constitutes the metal nonwoven fabric, and a relationship between surface tension of the metal nonwoven fabric determined thereby and liquid's surface tension. Here, in the present invention, a characteristic value obtained through measurement performed in the following manner is defined as liquid permeability.

First, a sample with a length of 25 mm and a width of 5 mm is obtained by cutting a dry metal nonwoven fabric. Next, the thickness and the mass of the sample are measured. The sample is suspended from above a glass container (that has a circular bottom with a diameter of 15 mm) filled with water, and placed into water contained in the container such that an end of the sample is immersed to a depth of 5 mm. Then, water permeates into the sample and wicks. After 15 minutes, the sample is taken out of the container, and the mass of water remaining in the glass container is measured. The average amount of water absorbed per volume of the sample, the volume being determined based on the outer contour dimensions of the sample before absorbing water, is calculated. In the specification of the present application, when the metal nonwoven fabric has an average amount of water absorbed per volume of 0.4 mL/cm$^3$ or more, it is determined as "having liquid permeability". A specific volume measurement method will be described later.

As long as the metal nonwoven fabric has liquid permeability as a whole, the metal nonwoven fabric may be a three-layered metal nonwoven fabric that includes, for example, two metal nonwoven fabrics and one or more layers of a mesh or perforated foil (hereinafter also referred to as "mesh or the like") provided between the two metal nonwoven fabrics. Alternatively, the metal nonwoven fabric may be a layered metal nonwoven fabric that includes three or more layers: two layers of a mesh or the like and one metal nonwoven fabric provided between the two layers. By configuring the metal nonwoven fabric as described above, the strength of the metal nonwoven fabric can be improved. The average mesh size (JIS Z8801) of the mesh or the average void size of the perforated foil is preferably 1000 $\mu$m or less, and may be 900 $\mu$m or less. The mesh or the like may be made of a metal or a nonmetal. In the case where the mesh or the like is made of a metal, the type of metal used to constitute the mesh or the like may be the same as or different from the type of metal that constitutes the metal nonwoven fabric.

From the viewpoint of improving the liquid permeability of the metal nonwoven fabric and causing a reactant contained in a permeated liquid to reach the metal fiber that constitutes the metal nonwoven fabric in a short time, the metal fiber has an average fiber diameter of preferably 20 nm or more and 10 $\mu$m or less, more preferably 20 nm or more and 6 $\mu$m or less, even more preferably 20 nm or more and 5 $\mu$m or less, yet even more preferably 30 nm or more and 3 $\mu$m or less, yet even more preferably 90 nm or more and 3 $\mu$m or less, and yet even more preferably 120 nm or more and 2.5 $\mu$m or less.

From the viewpoint of improving the liquid permeability of the metal nonwoven fabric, retaining a mechanical strength, and easily producing the metal nonwoven fabric, the metal fiber has an average length of preferably 0.5 $\mu$m or more and 5000 $\mu$m or less, more preferably 0.5 $\mu$m or more and 2000 $\mu$m or less, even more preferably 1 $\mu$m or more and 500 $\mu$m or less, yet even more preferably 3 $\mu$m or more and 200 $\mu$m or less, yet even more preferably 3 $\mu$m or more and 150 $\mu$m or less, and yet even more preferably 3 $\mu$m or more and 90 $\mu$m or less.

The average fiber diameter and the average length of metal fiber contained in the metal nonwoven fabric may be the same or different on one side of the metal nonwoven fabric and on the other side of the metal nonwoven fabric. Alternatively, when the metal nonwoven fabric is viewed in the thickness direction, each of the average fiber diameter of the metal fiber and the average length of the metal fiber may be varied stepwise, continuously, or in a combination thereof. This type of metal nonwoven fabric is formed using, for example, a plurality of different types of metal fibers.

The metal fiber contained in the metal nonwoven fabric is preferably very thin and long as described above. With the metal fiber having an average fiber diameter and an average length within the above-described ranges, it is possible to improve the liquid permeability of the metal nonwoven fabric, and cause a reactant contained in a permeated liquid to reach the surface of the metal fiber that constitutes the metal nonwoven fabric in a short time. In addition thereto, it is possible to easily control characteristic values of the metal fiber and enhance ease of handling of the metal fiber.

From the viewpoint of improving the liquid permeability of the metal nonwoven fabric and causing a reactant contained in a permeated liquid to reach the metal fiber that constitutes the metal nonwoven fabric in a short time, the metal fiber has an aspect ratio (length of metal fiber [m] / fiber diameter of the metal fiber [m]) of preferably 5 or more and 5000 or less, more preferably 13 or more and 3000 or less, even more preferably 20 or more and 3000 or less, yet even more preferably 20 or more and 1500 or less, and yet even more preferably 20 or more and 800 or less.

The average fiber diameter of the metal fiber contained in the metal nonwoven fabric can be measured in the following manner. To be more specific, first, the metal nonwoven fabric is observed using a scanning electron microscope (hereinafter also referred to as "SEM"). The metal nonwoven fabric is observed at a magnification at which the fiber diameter of the metal fiber that constitutes the metal nonwoven fabric can be easily observed, specifically, a magnification of 1000 times to 10000 times. In the obtained SEM image of the metal nonwoven fabric, ten metal fibers are arbitrarily selected from among the metal fibers seen in the SEM image excluding those that are entangled with other metal fibers and thus cannot be used in the measurement. Then, fiber diameter is obtained for each of the ten metal fibers, and the obtained fiber diameters are averaged to obtain the average fiber diameter of the metal fiber.

The average length of the metal fiber contained in the metal nonwoven fabric can be measured in the following manner. To be more specific, first, the metal nonwoven fabric is observed using an SEM. The metal nonwoven fabric is observed at a magnification at which the length of the metal fiber that constitutes the metal nonwoven fabric can be easily observed, specifically, a magnification of 200 times to 2000 times. In the obtained SEM image of the metal nonwoven fabric, twenty metal fibers are arbitrarily selected from among the metal fibers seen in the SEM image excluding those that are entangled with other metal fibers and thus cannot be used in the measurement. In the case where the arbitrarily selected twenty metal fibers are out of the SEM image on the screen, a plurality of consecutive SEM images are panoramically connected, and then the length of each of the twenty metal fibers is obtained. Then, the obtained lengths are averaged to obtain the average length of the metal fiber.

The metal fiber contained in the metal nonwoven fabric may take a form in which the average fiber diameter is substantially uniform over the entire length of the metal fiber, or a form in which the average fiber diameter is beaded rather than uniform. The metal fiber preferably has a configuration in which at least one end portion of the metal fiber has a tapered shape. The term "tapered shape" refers to, when the end portion of the metal fiber is observed, a shape whose thickness gradually decreases toward the tip of the shape. As a result of at least one end portion of the metal fiber having a tapered shape, the contact area between metal fibers increases, and thus this configuration is advantageous from the viewpoint of exhibiting electric conductivity and thermal conductivity, as well as retaining a mechanical strength. Furthermore, with the metal fiber with at least one end portion of the metal fiber having a tapered shape, irregularities on the contact surface are reduced as compared with a metal fiber with a uniform average fiber diameter. Accordingly, the variation in size of voids of the metal nonwoven fabric can be suppressed.

From the viewpoint of making this advantage even more prominent, the angle of the tip of the tapered shape is preferably 90 degrees or less, more preferably 80 degrees or less, and even more preferably 70 degrees or less, and may be 60 degrees or less, 50 degrees or less, or 45 degrees or less.

The angle of the tip of the tapered shape is measured in the following procedure. First, as described above, the fiber diameter of a metal fiber is measured at a magnification of 1000 times to 10000 times using an SEM. Next, an arc with a diameter that is the same as the fiber diameter of the metal fiber is drawn around the tip end of the metal fiber to obtain two intersections of the arc and the metal fiber. Then, the angle formed by straight lines between the two intersections and the tip end of the metal fiber is measured as the angle of the tip. In the case where the end portion of the metal fiber has a linear or substantially linear cross section, the center of the cross section is defined as the tip end. Also, in the case where the end portion of the metal fiber has a linear or substantially linear cross section, and the cross-sectional length is greater than one half of the fiber diameter of the metal fiber, the metal fiber is not subjected to the measurement. The above-described measurement is performed for ten or more metal fibers, and the arithmetic average value of the ten or more metal fibers is defined as the angle of the tip of the tapered shape.

The metal fiber contained in the metal nonwoven fabric typically has a fiber shape extending in one direction, and may or may not have a branch structure that includes a main chain portion extending in one direction and a branch portion branching from the main chain portion. From the viewpoint of controlling the size of voids in the metal nonwoven fabric to improve liquid permeability, the metal fiber preferably has a non-branch structure that includes only a main chain portion. On the other hand, from the viewpoint of further improving the contact area with a liquid so that the metal nonwoven fabric will have a bulky structure, the metal fiber preferably has one or more branch portions. The metal nonwoven fabric may be formed using only a metal fiber that has a non-branch structure that includes only a main chain portion, only a metal fiber that includes one or more branch portions, or a combination thereof.

There is no particular limitation on the type of metal that constitutes the metal fiber contained in the metal nonwoven fabric, and any type of metal can be used. Taking the balance between high electrode conductivity and ease of industrial application into consideration, it is possible to use copper, silver, gold, nickel, lead, palladium, platinum, cobalt, tin, iron, zinc, bismuth, or an alloy that contains any of the above-listed metals. In particular, the metal that constitutes the metal fiber is preferably copper, nickel, tin, zinc, or an alloy that contains any of these metals. Alternatively, the metal fiber may be formed in a state in which crystals of a plurality of types of metals from among the above-listed metals and crystals of an alloy of the above-listed metals are mixed. In particular, the metal fiber is preferably made using copper or a copper alloy as a base material. Here, the expression "using copper or a copper alloy as a base material" means that the proportion of copper in the metal fiber is 60 mass% or more. Also, the expression "state in which crystals of a plurality of types of metals from among the above-listed metals and crystals of an alloy of the above-listed metals are mixed" encompasses, for example, a state in which crystals of different types of metals are connected such as Cu crystal-Ni crystal-Cu crystal-Ni crystal.

The surface of the metal fiber contained in the metal nonwoven fabric may be covered with a substance other than metals. The term "covered" as used herein encompasses the case where the metal that constitutes the metal fiber is chemically bonded to a substance other than metals and the case where the metal that constitutes the metal fiber is physically adsorbed to a substance other than metals. The metal fiber may be in either one or both of the covered states.

Examples of the substance other than metals used to cover the metal fiber contained in the metal nonwoven fabric include oxide, sulfide, organic substance, a carbon material, a semiconductor material, a ferroelectric material, a magnetic material, a MOF (metal organic framework), a PCP (porous coordination polymer), and the like. Out of these, in the case where the metal nonwoven fabric is used as an electrode catalyst, the metal fiber is preferably covered with oxide, an organic substance, a carbon material, or a semiconductor material.

There is no particular limitation on the method for covering the metal fiber with another substance. Examples of the covering method include: a method in which a metal fiber is deposited using a later-described method, and then electroplated in an electrolytic vessel that contains the substance used to cover the metal fiber; a cation electrochemical coating method; an anion electrochemical coating method; a surface oxidation treatment method in which the surface is electrically or chemically oxidized to react with a chemical substance in the liquid to form a coating; a substitution plating method; an electroless plating method; a method in which a catalyst used for substitution plating or electroless plating is applied onto the metal fiber, and then plated with an intended substance; a liquid phase deposition method; electrophoresis method; a method that uses a surface potential difference; a sol-gel method; a gel-sol method; a polyol method; a spray method; a cold spray method; a spray dry method; an immersion method; a vapor deposition method; a sputtering method; a CVD method; a thermal decomposition method; a plasma deposition method; a dipping method; an atomic layer deposition method (ALD method); a coating method; an ink method; a fine particle coating method; and a dry method.

The metal fiber contained in the metal nonwoven fabric may be composed of a core portion made of a metal and a shell portion that is provided on a surface of the core portion and is made of a metal other than the metal that constitutes the core portion. In other words, the metal fiber contained in the metal nonwoven fabric may be formed using different types of metals stacked.

The core portion is the main portion of the metal fiber. The shell portion may be provided over the entire surface of the core portion. Alternatively, the shell portion may be present to cover a portion of the surface of the core portion.

The boundary between the core portion and the shell portion may be clear, or there may be an unclear portion in the boundary between the core portion and the shell portion as long as the core portion and the shell portion can be distinguished from each other.

Examples of the metal that constitutes the core portion include copper, silver, gold, nickel, lead, palladium, platinum, cobalt, tin, iron, zinc or bismuth, and an alloy that contains any of the above-listed metals. There is no particular limitation on the metal that constitutes the shell portion as long as a type of metal that is different from the type of metal that constitutes the core portion is used. Examples include copper, silver, nickel, tin, zinc, lead, iron, cobalt, platinum, gold, palladium, and the like.

There is no particular limitation on the method for producing a metal fiber that includes a core portion and a shell portion. Examples include: a method in which a metal fiber is deposited using a later-described method, and then electroplated in an electrolytic vessel that contains the substance used to cover the metal fiber; a substitution plating method; an electroless plating method; a method in which a catalyst used for substitution plating or electroless plating is applied onto the metal fiber, and then plated with an intended substance; an electrophoresis method; a method that uses a surface potential difference, a polyol method; a spray method; a cold spray method; a spray dry method; a sputtering method; a CVD method; a thermal decomposition method; a plasma deposition method; an atomic layer deposition method (ALD method), an ink method, a fine particle coating method; and a dry method.

The metal fiber contained in the metal nonwoven fabric preferably has a polycrystalline structure in which a plurality of crystals are connected in an extension direction (hereinafter also referred to as "lengthwise direction") of the metal fiber. With the metal fiber described above, due to its characteristic crystalline structure, the fusing temperature between metal fibers decreases, and thus the metal fibers can be fused at a lower temperature. As a result, the metal nonwoven fabric can be formed under a moderate condition at a lower temperature. Also, the metal fiber is more likely to take a linear form rather than a curved form, and thus the mechanical strength of the metal nonwoven fabric can be increased. Also, a crystal plane prone to oxidation is not preferentially exposed at a side surface of the metal fiber, and thus oxidation of the side surface of the metal fiber is suppressed. Furthermore, as described above, the end portion of the metal fiber can be configured to have a tapered shape, and thus, the contact area between metal fibers increases, and electric conductivity and thermal conductivity can be easily exhibited.

The term "extension direction" of the metal fiber used above refers to, in the case where the metal fiber has a curved portion, its tangential direction.

The crystalline structure of the metal fiber will be described in detail. Where a length of a crystal of the metal that constitutes the metal fiber in the lengthwise direction of the metal fiber is represented by X, and a length of the crystal in a direction (also referred to as "width direction") perpendicular to the lengthwise direction is represented by Y, X/Y that is the ratio of X to Y preferably takes a value of 4 or less.

As described above, the crystals of the metal that constitutes the metal fiber preferably have a substantially isotropic shape in which there is no significant difference between the length in the lengthwise direction and the length in the width direction. As described above, the average fiber diameter of the metal fiber is 20 nm or more and 10 $\mu$m or less, and it is therefore understood that the crystals of the metal that constitutes the metal fiber are generally fine. Due to the crystals of the metal that constitutes the metal fiber contained in the metal nonwoven fabric having a structure as described above, the fusing temperature between metal fibers decreases, and thus the metal fibers can be fused at a lower temperature. As a result, the metal nonwoven fabric can be formed under a moderate condition at a lower temperature. Also, the metal fiber is more likely to take a linear form rather than a curved form, and thus the mechanical strength of the metal nonwoven fabric can be increased. Also, a crystal plane prone to oxidation is not preferentially exposed at a side surface of the metal fiber, and thus oxidation of the side surface of the metal fiber is suppressed. Furthermore, the end portion of the metal fiber can be configured to have a tapered shape, and thus the contact area between metal fibers increases, and electric conductivity and thermal conductivity can be easily exhibited.

From the viewpoint of making this advantage even more prominent, the ratio X/Y takes a value of more preferably 3 or less, and even more preferably 2.5 or less.

The value of the ratio X/Y is calculated in the following manner. First, each of crystals that are present at three boundary regions formed by dividing the length of a single metal fiber that constitutes the metal nonwoven fabric into four equal parts in the lengthwise direction of the metal fiber is subjected to measurement. The measurement is repeatedly performed in the same manner as described above for two or more metal fibers that constitute the metal nonwoven fabric. The calculation of the value is performed as follows. The average value of the single metal fiber is calculated based on the values of the ratio X/Y obtained at the boundary regions of the metal fiber (the values of the ratio X/Y obtained at the boundary regions are averaged, instead of determining the ratio X/Y from the average value of the length X and the average value of the length Y), and furthermore, the arithmetic average value is calculated from the obtained values of the ratio X/Y of the plurality of metal fibers. The arithmetic average value is rounded at the first decimal place. In the foregoing description, the following expression was used: "boundary regions formed by dividing the length of a single metal fiber that constitutes the metal nonwoven fabric into four equal parts in the lengthwise direction of the metal fiber". However, if it is not possible to perform measurement at the boundary regions for some measurement reasons, measurement is performed on portions close to the boundary regions (each portion corresponding to, for example, 10% or less of the length of the metal fiber on the right and left sides of each boundary region).

The term "crystal" used in the specification of the present application refers to crystal grains, and the size of crystal grains can be measured based on an electron backscatter diffractometry (hereinafter also referred to as "EBSD"). Note that the term "crystal grains" as used herein is a concept different from crystallite size determined from an XRD pattern. If the crystal as used in the specification of the present application is a twinned crystal, it is defined that the crystals that constitute the twinned crystal are different crystals. Also, even if it is not possible to determine whether the crystal is a twinned crystal, as long as a portion of a line indicating a grain boundary is observed based on EBSD, it is defined that the crystal is composed of different crystals, and the value of the ratio X/Y is determined for each crystal.

There is no particular limitation on the values of the lengths X and Y when the value of the ratio X/Y is 4 or less. However, from the viewpoint of decreasing the fusing temperature between metal fibers, the value of the length X is preferably 10 $\mu$m or less, more preferably 5 nm or more and 2 $\mu$m or less, and even more preferably 10 nm or more and 500 nm or less. From the same viewpoint, the value of the length Y is preferably 3 $\mu$m or less, more preferably 5 nm or more and 1 $\mu$m or less, and even more preferably 10 nm or more and 400 nm or less.

On the other hand, when the value of the ratio X/Y is greater than 4, the metal fiber may be characterized only by the value of the length Y described above. That is, the value of the length Y is preferably 10 nm or less.

When the value of the length Y is 10 nm or less, it means that, in terms of the number of metal atoms, the length Y is as short as a length corresponding to less than or equal to about 100 atoms. As with the design concept that the value of the ratio X/Y is set to 4 or less, this means the same as the crystals being fine crystals. Due to this, with the metal fiber described above, the temperature at which the metal fiber is fused can be lowered in the metal nonwoven fabric according to the present invention. As long as the value of the length Y is 10 nm or less, the value of the ratio X/Y does not matter.

The value of the length Y described above is calculated in the following manner. First, crystals that are present at three boundary regions formed by dividing the length of a single metal fiber that constitutes the metal nonwoven fabric into four equal parts in the lengthwise direction of the metal fiber are subjected to measurement to obtain the value of the length Y at each boundary region. The measurement is repeatedly performed in the same manner as described above for two or more metal fibers, and the measured values are arithmetically averaged to obtain an arithmetic average value. The arithmetic average value is rounded at the first decimal place. In the foregoing description, the following expression was used: "boundary regions formed by dividing the length of a single metal fiber that constitutes the metal nonwoven fabric into four equal parts in the lengthwise direction of the metal fiber". However, if it is not possible to perform measurement at the boundary regions for some measurement reasons, measurement is performed on portions close to the boundary regions (each portion corresponding to, for example, 10% or less of the length of the metal fiber on the right and left sides of each boundary region).

The metal fiber contained in the metal nonwoven fabric is also characterized by crystal orientation of the metal that constitutes the metal fiber.

To be more specific, the presence ratio of crystal grains constituting the [110] orientation, which is evaluated based on electron diffractometry using a transmission electron microscope (hereinafter also referred to as "TEM") or based on EBSD in a range of $\pm 30°$ in the extension direction of the metal fiber, when attention is given to crystals that are present at three boundary regions formed by dividing the length of the metal fiber into four equal parts in the extension direction of the metal fiber, is preferably 50% or less, more preferably 45% or less, and even more preferably 40% or less. Satisfying the above-described relationship means that the crystal grains constituting the [110] orientation are not preferentially oriented in the lengthwise direction of the metal fiber.

The presence ratio of crystal grains constituting the [110] orientation is calculated by extracting two or more metal fibers from the metal nonwoven fabric, drawing, on each of the extracted metal fibers, boundary lines that divide the length of the metal fiber into four equal parts in the lengthwise direction of the metal fiber, and performing measurement on three boundary regions formed by the boundary lines.

In the case of performing evaluation based on electron diffractometry using a TEM, the presence ratio of crystal grains constituting the [110] orientation is the percentage of crystal grains constituting the [110] orientation measured, for each one of the boundary regions, at a total of six or more points around the midpoint of the boundary line (for example, at six points in the case of extracting two metal fibers, and at fifteen points in the case of extracting five metal fibers).

In the case of performing evaluation based on EBSD, the presence ratio of crystal grains constituting the [110] orientation is measured, for each one of the boundary regions, at a total of eighteen or more points around three points that divide the boundary line into four equal parts (for example, at eighteen more points in the case of extracting two metal fibers, and at forty-five points in the case of extracting five metal fibers).

The obtained value is rounded at the first decimal place of percentage.

In the case of observing the crystal grains constituting the [110] orientation using a TEM, a metal fiber is observed by causing electrons to pass through the metal fiber. However, when the metal fiber has a fiber diameter of 200 nm or more, electrons cannot pass through the metal fiber, and it is therefore not possible to obtain an intended electron diffractogram. To address this, when the metal fiber has a fiber diameter of 200 nm or more, the presence ratio of crystal grains constituting the [110] orientation is evaluated based on EBSD. In the foregoing description, the following expression was used: "boundary regions formed by dividing the length of the metal fiber into four equal parts in the extension direction of the metal fiber". However, if it is not possible to perform measurement at the boundary regions for some measurement reasons, measurement is performed on portions close to the boundary regions (each portion corresponding to, for example, 10% or less of the length of the metal fiber on the right and left sides of each boundary region).

Generally speaking, the side surface of a metal fiber in which crystal grains constituting the [110] orientation are preferentially oriented in the lengthwise direction of the metal fiber is likely to be oxidized, which causes an increase in the resistance of the metal fiber in the width direction. In contrast, with a metal fiber in which crystal grains do not grow in the [110] orientation in the lengthwise direction, the metal fiber is unlikely to be oxidized.

Likewise, from the viewpoint of causing the metal fiber that constitutes the metal nonwoven fabric to be less likely to corrode, the presence ratio of crystal grains constituting the [111] orientation, which is evaluated based on electron diffractometry using a TEM or based on EBSD in a range of $\pm 30°$ in the extension direction of the metal fiber, when attention is given to crystals that are present at three boundary regions formed by dividing the length of the metal fiber into four equal parts in the extension direction of the metal fiber, is preferably 50% or more, more preferably 52% or more, and even more preferably 60% or more. On the other hand, it is realistic to set the upper limit value of the presence ratio to about 80%.

The presence ratio of crystal grains constituting the [111] orientation is calculated by extracting two or more metal fibers from the metal nonwoven fabric, drawing, on each of the extracted metal fibers, boundary lines that divide the length of the metal fiber into four equal parts in the lengthwise direction of the metal fiber, and performing measurement on three boundary regions formed by the boundary lines.

In the case of performing evaluation based on electron diffractometry using a TEM, the presence ratio of crystal grains constituting the [111] orientation is the percentage of crystal grains constituting the [111] orientation measured, for each one of the boundary regions, at a total of six or more points around the midpoint of the boundary line (for example, at six points in the case of extracting two metal fibers, and at fifteen points in the case of extracting five metal fibers).

In the case of performing evaluation based on EBSD, the presence ratio of crystal grains constituting the [111] orientation is measured, for each one of the boundary regions, at a total of eighteen or more points around three points that divide the boundary line into four equal parts (for example, at eighteen more points in the case of extracting two metal fibers, and at forty-five points in the case of extracting five metal fibers).

The obtained value is rounded at the first decimal place of percentage.

Satisfying the above-described relationship means that the crystal grains constituting the [111] orientation are preferentially oriented in the lengthwise direction of the metal fiber. It is preferable that the crystal grains constituting the [111] orientation are preferentially oriented in the lengthwise direction of the metal fiber because, from a crystallographic perspective, it means that the (100) plane whose side surface is likely to corrode is not exposed. In the foregoing description, the following expression was used: "boundary regions formed by dividing the length of the metal fiber into four equal parts in the extension direction of the metal fiber". However, if it is not possible to perform measurement at the boundary regions for some measurement reasons, measurement is performed on portions close to the boundary regions (each portion corresponding to, for example, 10% or less of the length of the metal fiber on the right and left sides of each boundary region).

The presence ratio of crystal grains constituting the [100] orientation, the presence ratio of crystal grains constituting the [110] orientation, and the presence ratio of crystal grains constituting the [111] orientation, each of which is evaluated based on electron diffractometry using a TEM or based on EBSD in a range of $\pm 30°$ in the extension direction of the metal fiber, when attention is given to crystals that are present at three boundary regions formed by dividing the length of the metal fiber into four equal parts in the extension direction of the metal fiber, are preferably less than 50%, and more preferably 40% or less.

The presence ratio of crystal grains constituting the [110] orientation, the presence ratio of crystal grains constituting the [111] orientation, and the presence ratio of crystal grains constituting the [100] orientation are each calculated by extracting two or more metal fibers from the metal nonwoven fabric, drawing, on each of the extracted metal fibers, boundary lines that divide the length of the metal fiber into four equal parts in the lengthwise direction of the metal fiber, and performing measurement on three boundary regions formed by the boundary lines.

In the case of performing evaluation based on electron diffractometry using a TEM, the presence ratio of crystal grains constituting the [110] orientation, the presence ratio of crystal grains constituting the [111] orientation, and the presence ratio of crystal grains constituting the [100] orientation are each measured, for each one of the boundary regions, at a total of six or more points around the midpoint of the boundary line (for example, at six points in the case of extracting two metal fibers, and at fifteen points in the case of extracting five metal fibers).

In the case of performing evaluation based on EBSD, the presence ratio of crystal grains constituting the [110] orientation, the presence ratio of crystal grains constituting the [111] orientation, and the presence ratio of crystal grains constituting the [100] orientation are each measured, for each one of the boundary regions, at a total of eighteen or more points around three points that divide the boundary line into four equal parts (for example, at eighteen more points in the case of extracting two metal fibers, and at forty-five points in the case of extracting five metal fibers).

The obtained value is rounded at the first decimal place of percentage. Here, the following expression was used: "boundary regions formed by dividing the length of the metal fiber into four equal parts in the extension direction of the metal fiber". However, if it is not possible to perform measurement at the boundary regions for some measurement reasons, measurement is performed on portions close to the boundary regions (each portion corresponding to, for example, 10% or less of the length of the metal fiber on the right and left sides of each boundary region).

Satisfying the above-described relationship in the metal fiber included in the metal nonwoven fabric means that the crystals of the metal that constitutes the metal fiber are randomly oriented. The fact that the orientation directions of the crystals of the metal that constitutes the metal fiber are random means that the crystals of the metal that constitutes the metal fiber are polycrystalline and are also small. Due to the crystals being small, the fusing temperature between metal fibers is lowered so that the metal fibers can be fused at a lower temperature. As a result, the metal nonwoven fabric can be formed under a moderate condition at a lower temperature. Furthermore, the expression "the orientation directions of the crystals of the metal that constitutes the metal fiber are random" means that the (100) plane is not preferentially exposed at the side surface of the metal fiber, and also means that oxidation of the side surface of the metal fiber is not facilitated.

In the metal nonwoven fabric, the number of metal fibers that have a curved portion whose radius of curvature is less than or equal to 5 times the length of the metal fiber is preferably 20% or more of the total number of metal fibers contained in the metal nonwoven fabric. It is preferable that the metal fiber that constitutes the metal nonwoven fabric originally have a curved portion as described above because it is possible to improve the resistance of the metal nonwoven fabric when the metal nonwoven fabric is compressed or stretched, or a bending stress is applied to the metal nonwoven fabric. Furthermore, in the metal nonwoven fabric, it is possible to obtain an advantage in that a plurality of metal fibers can easily come into contact with other metal fibers in the transverse (or width) direction of the metal fibers, and as a result, electric conductivity and thermal conductivity can be easily exhibited.

The radius of curvature is calculated as follows. First, the metal nonwoven fabric is observed using an SEM. A straight line that connects opposing ends of a metal fiber in the SEM image is drawn, and the length of the straight line (chord length) is measured. Furthermore, an auxiliary line perpendicular to the straight line is drawn from the midpoint of the straight line toward the metal fiber, and the distance (camber) between the midpoint and a position at which the metal fiber intersects is measured. The radius of curvature is obtained from the following calculation formula.

$$r = (C \times C)/(8 \times h) + h/2,$$

where r represents the radius of curvature, C represents the chord length, and h represents the camber.

The radius of curvature is preferably 0.5 $\mu$m or more and 1000 $\mu$m or less.

In the case where the metal fiber contained in the metal nonwoven fabric is bent, the radius of curvature is obtained from the calculation formula given above by approximating the metal fiber shape to a shape with a curved portion. Also, in the case where the straight line that connects opposing ends of a metal fiber transverses the metal fiber, the radius of curvature is measured for a metal fiber extending from the transversed portion.

The metal nonwoven fabric may contain particles with a shape other than that of the metal fiber. The metal nonwoven fabric is, of course, produced based on the concept that the interstitial spaces in the metal nonwoven fabric are controlled by randomly depositing metal fibers, and thus from the viewpoint of improving the liquid permeability of the metal nonwoven fabric even when the metal nonwoven fabric is deformed such as being bent or stretched, it is preferable that particles in a form other than fibrous form are not present in the metal nonwoven fabric as much as possible.

Here, the ratio of particles with a shape other than that of the metal fiber in the metal nonwoven fabric is defined as "irregular shape ratio". The irregular shape ratio is preferably 50% or less, more preferably 40% or less, and even more preferably 30% or less. It is possible to easily obtain a metal nonwoven fabric with an irregular shape ratio of 50% or less by producing the metal nonwoven fabric based on a production method, which will be described later.

The irregular shape ratio is obtained by observing, using an SEM, a measurement sample in the field of view where the fiber diameter and length of the metal fiber can be seen at a magnification of 5 to 30 times the average fiber diameter of the metal fiber and the average length of the metal fiber, and calculating the percentage [area of irregular shaped particles / area of metal nonwoven fabric]. The term "irregular shape" refers to a shape other than that of the metal fiber.

From the viewpoint of improving the liquid permeability of the metal nonwoven fabric and also causing a reactant contained in a permeated liquid to reach the surface of the metal fiber that constitutes the metal nonwoven fabric in a short time, the metal nonwoven fabric has a void distribution peak top diameter measured according to mercury porosimetry of preferably 30 $\mu$m or less, more preferably 0.01 $\mu$m or more and 30 $\mu$m or less, even more preferably 0.02 $\mu$m or more and 25 $\mu$m or less, yet even more preferably 0.05 $\mu$m or more and 20 $\mu$m or less, and yet even more preferably 0.1 $\mu$m or more and 20 $\mu$m or less.

In the case where two or more peaks are observed in a void distribution obtained based on mercury porosimetry, it is preferable that the highest one of the observed peaks has a distribution peak top diameter within the above-described range from the viewpoint of making the above-described advantage even more prominent.

In the case where the metal nonwoven fabric has voids of 30 $\mu$m or less, or in other words, the space between metal fibers contained in the metal nonwoven fabric is 30 $\mu$m or less, the void distribution peak top diameter is determined based on mercury porosimetry. In the case of voids having a distribution peak top diameter greater than 30 $\mu$m, the void size is determined from the average sphere-equivalent diameter of pores formed by dividing the void through image analysis in X-ray CT measurement.

For the measurement based on mercury porosimetry, Auto Pore IV 9510 available from Micromeritics Instrument Corporation is used. For the measurement, the mercury intrusion pressure is set to about 0.5 to 60000 psi (about 3 kPa to 400 MPa), the measurement mode is set to pressure increase (intrusion) process, the mercury contact angle is set to 141.3°, and the mercury surface tension is set to 484 dyn/ cm.

The X-ray CT measurement is performed using SKYSCAN AN2214 available from Bruker Corporation, and the average sphere-equivalent diameter of pores formed by dividing the void is determined using image analysis software Avizo 3D available from Thermo Fisher Scientific, Inc.

The porosity of the metal nonwoven fabric can be calculated as the volume of the space present in the metal nonwoven fabric relative to the volume based on the outer contour dimensions of the metal nonwoven fabric.

Specifically, first, a volume V1 of the metal nonwoven fabric is calculated from the length and the width of the metal nonwoven fabric, and the thickness of the metal nonwoven fabric measured based on a later-described method. Next, the mass of the metal nonwoven fabric is measured, and a volume V2 of the metal nonwoven fabric is determined based on the specific gravity of the metal that constitutes the metal nonwoven fabric. Then, the volume V2 determined from the mass of the metal nonwoven fabric is subtracted from the volume V1 of the metal nonwoven fabric to obtain a space volume V3. The percentage of the space volume V3 present in the metal nonwoven fabric relative to the volume V1 of the metal nonwoven fabric is determined, and defined as porosity.

From the viewpoint of increasing the amount of liquid that permeates into the metal nonwoven fabric, the porosity is preferably 50% or more, more preferably 60% or more, even more preferably 70% or more, and yet even more preferably 80% or more. Also, from the viewpoint of maintaining the strength to retain the metal nonwoven fabric, the porosity is preferably 99% or less.

The void distribution peak top diameter of the metal nonwoven fabric measured based on mercury porosimetry, the (average) sphere-equivalent diameter of pores formed by dividing the void determined based on the X-ray CT method, and the porosity of the metal nonwoven fabric can be achieved by adjusting, for example, the average fiber diameter of the metal fiber and the average length of the metal fiber. Also, they can also be achieved by intentionally mixing a plurality of types of metal fibers that have different average fiber diameters and different average lengths. In addition thereto or instead thereof, they can also be achieved by adjusting a condition used in the method for producing a metal nonwoven fabric, which will be described later, as appropriate.

The metal nonwoven fabric configured as described above has voids of appropriate size in the metal nonwoven fabric, and thus by capillary action due to the size of the voids, the liquid permeability of the metal nonwoven fabric, in particular, the permeability of aqueous liquid can be improved. In other words, the amount of liquid absorbed in a fixed time per volume based on the outer contour of the metal nonwoven fabric in dry state can be increased. As a result, when, for example, a solution that contains a reactant comes into contact with the metal nonwoven fabric, the solution soon permeates into the voids of the metal nonwoven fabric, and thus the reactant easily reaches the metal fiber surface that forms the voids or very close proximity thereof. Also, the voids of the metal nonwoven fabric are sufficiently small relative to the diffusion rate of the reactant in the solution, and thus the reactant can reach the surface of the metal fiber that constitutes the metal nonwoven fabric in a short time.

On the other hand, when a solution that contains a reactant comes into contact with the metal nonwoven fabric with voids larger than voids of appropriate size, capillary action is not sufficient as compared with that of the metal nonwoven fabric according to the present invention, and thus the solution does not sufficiently permeate into the metal nonwoven fabric. That is, the liquid permeability for the liquid cannot be improved. Also, the voids of the metal nonwoven fabric are large relative to the diffusion rate of the reactant in the solution, and thus reactant is unlikely to reach the surface of the metal fiber that constitutes the metal nonwoven fabric in a short time.

Accordingly, with the metal nonwoven fabric according to the present invention, when the metal nonwoven fabric comes into contact with the solution, a reaction of the reactant contained in the solution efficiently takes place, and thus desired physical and chemical properties are likely to be exhibited. In the specification of the present application, the term "aqueous liquid" refers to a liquid (a solution, a dispersion liquid, an emulsion, or the like) that contains 5 mass% or more of water.

The advantage of the metal nonwoven fabric according to the present invention can be obtained in not only a water-based liquid, but also an organic solvent -based liquid, and the type of solvent does not matter. This is because, by treating the surface of the metal fiber that constitutes the metal nonwoven fabric with a substance that has affinity for the solvent that comes into contact with the metal nonwoven fabric, the liquid permeability of the metal nonwoven fabric can be exhibited for various types of solvents.

From the viewpoint of improving the liquid permeability of the metal nonwoven fabric and the reactivity with the liquid when the metal nonwoven fabric is used in an electrode, and also satisfying the practical utility as an electrode, the metal nonwoven fabric has an average thickness of preferably 3 $\mu$m or more, more preferably 50 $\mu$m or more, and even more preferably 90 $\mu$m or more. When the metal nonwoven fabric has an average thickness of 3 $\mu$m or more, the metal nonwoven fabric can maintain a self-standing state. The upper limit of the average thickness of the metal nonwoven fabric may be, but is not necessarily because it depends on the application of the metal nonwoven fabric, 50 mm or less, 30 mm or less, 10 mm or less, 5 mm or less, or 2 mm or less.

The average thickness of the metal nonwoven fabric can be determined in the following manner.

First, a cut piece of the metal nonwoven fabric is prepared by cutting the metal nonwoven fabric into 2 cm $\times$ 2 cm. If it is not possible to prepare a cut piece of this size as a measurement target cut piece, a cut piece of a size as large as possible is prepared. Next, the cut piece is placed on a flat plate, and another flat plate that is larger than the cut piece and has a weight of 1 g is placed on the cut piece. In this state, the distance between the lower surface of the flat plate placed under the cut piece and the upper surface of the flat plate placed on the cut piece is measured using a caliper. The thickness of the two flat plates measured in advance is subtracted from the obtained measured value, and the obtained value is defined as "the thickness of the metal nonwoven fabric". Thickness is measured for cut pieces obtained from three or more arbitrarily selected points of the metal nonwoven fabric, and the arithmetic average value of the measured values is defined as "average thickness".

When the thickness of the metal nonwoven fabric is greater than 10 $\mu$m, the average thickness is measured using a caliper as described above. When the thickness of the metal nonwoven fabric is 10 $\mu$m or less, the average thickness is measured using an SEM cross-sectional image.

From the viewpoint of causing a liquid to permeate into the metal nonwoven fabric and also causing an appropriate reaction on the metal fiber surface when the reactant in the liquid reaches the surface of the metal fiber that constitutes the metal nonwoven fabric in a short time, the metal nonwoven fabric has a specific surface area of preferably 0.02 $m^2$/g or more and 22 $m^2$/g or less, more preferably 0.1 $m^2$/g or more and 10 $m^2$/g or less, even more preferably 0.2 $m^2$/g or more and 3 $m^2$/g or less, and yet even more preferably 0.25 $m^2$/g or more and 2 $m^2$/g or less.

The specific surface area of the metal nonwoven fabric can be determined in the following manner.

In the case of the metal nonwoven fabric having a specific surface area of 0.1 $m^2$/g or more, specific surface area is determined, for example, based on the krypton gas adsorption-BET multipoint method using a specific surface area / pore size distribution measuring device BELSORP-max available from Bel Japan, Inc. Also, in the case of the metal nonwoven fabric having a specific surface area of less than 0.1 $m^2$/g, specific surface area is determined, for example, performing X-ray CT measurement using a nanofocus X-ray CT scanner SKYSCAN AN2214 available from Bruker Corporation, and quantifying, based on the obtained three-dimensional information, structural features of the three-dimensional object that is the measurement target such as, for example, the area and volume of the object using image analysis software Avizo 3D available from Thermo Fisher Scientific, Inc.

The specific surface area of the metal nonwoven fabric can be adjusted by, for example, forming the metal nonwoven fabric using metal fibers that have different average fiber diameters or stacking a plurality of types of metal nonwoven fabrics.

From the viewpoint of causing a liquid to permeate into the metal nonwoven fabric and also causing an appropriate reaction on the metal fiber surface when the reactant in the liquid reaches the surface of the metal fiber that constitutes the metal nonwoven fabric in a short time, the metal nonwoven fabric has an apparent density of preferably 0.01 $g/cm^3$ or more and 2.0 $g/cm^3$ or less, more preferably 0.05 $g/cm^3$ or more and 1.7 $g/cm^3$ or less, and even more preferably 0.1 $g/cm^3$ or more and 1.4 $g/cm^3$ or less.

The apparent density is determined by calculating the volume V1 of the metal nonwoven fabric and the mass of the metal nonwoven fabric using the above-described method, and dividing the mass by volume V1.

The apparent density of the metal nonwoven fabric can be adjusted by, for example, increasing the average fiber diameter of the metal fiber, increasing the average thickness of the metal fiber, or stacking a plurality of types of metal nonwoven fabrics.

Next, a preferred method for producing a metal nonwoven fabric according to the present invention will be described. Preferably, electrolysis is used to produce a metal fiber that mainly constitutes a metal nonwoven fabric. By selecting an appropriate additive and performing electrolysis under an appropriate electrolysis condition, it is possible to easily obtain a metal fiber that has a low degree of aggregation. When a metal fiber that has a low degree of aggregation is deposited and sintered, the metal fiber can be easily sintered at a low temperature. As a result, it is possible to easily form a metal nonwoven fabric. In addition thereto, electrolysis is advantageous in that the metal fiber can be easily controlled into a desired shape. Furthermore, the electrolyte solution can be repeatedly used, which means that the amount of liquid required to produce a metal nonwoven fabric can be reduced, and thus the amount of waste liquid that needs to be treated at the same time can also be reduced.

For producing the metal fiber using electrolysis, for example, for example, the step of immersing an anode and a cathode in a sulfuric acid electrolyte solution that contains a metal element source, and causing direct current to flow therethrough to perform electrolytic reduction to deposit a metal fiber on the cathode surface may be performed, for example. The current density is preferably 50 $A/m^2$ or more and 600 $A/m^2$ or less. After that, for producing the metal nonwoven fabric, the step of casting an electrolyte solution slurry that contains the deposited metal fiber into a mold to settle the slurry, removing the supernatant liquid, drying and optionally pressing the resultant, and performing reduction may be performed, for example.

There is no particular limitation on the type of metal element that can be used in the production method of the present invention as long as it is possible to produce the metal fiber using the production method of the present invention. For example, any of the above-described metal elements can be used.

When producing the metal fiber in the above-described procedure, it is preferable to perform electrolytic reduction in a state in which an oily substance is attached to the cathode surface. This is advantageous in that, when metal element ions are reduced in this state, the electrolytic reduction reaction that proceeds on the electrode can be controlled.

As the oily substance attached to the cathode surface when producing the metal fiber, any type of organic compound that is slightly water-soluble or water-insoluble and has such a viscosity that the oily substance that has been attached to the cathode surface can be maintained at the cathode surface. Examples of the organic compound as long as it is slightly water-soluble or water-insoluble include an aliphatic hydrocarbon, an aromatic hydrocarbon, an aliphatic alcohol, an aromatic alcohol, an aliphatic aldehyde, an aromatic aldehyde, an aliphatic ether, an aromatic ether, an aliphatic ketone, an aromatic ketone, an aliphatic carboxylic acid, a salt thereof, an aromatic carboxylic acid, a salt thereof, an amide of an aliphatic carboxylic acid, an amide of an aromatic carboxylic acid, an ester of an aliphatic carboxylic acid, an ester of an aromatic carboxylic acid, and the like. Out of these, in particular, it is preferable to use an organic solvent that contains a higher fatty acid, a salt thereof, an ester, an amide, or a mixture thereof. The higher fatty acid may be a monoprotic acid or a polyprotic acid.

As the higher fatty acid, a saturated or unsaturated aliphatic carboxylic acid having preferably 10 or more and 25 or less carbon atoms, more preferably 10 or more and 22 or less carbon atoms, and even more preferably 11 or more and 20 or less carbon atoms can be used.

As the method for attaching the oily substance to the cathode surface, for example, the following methods can be used: a method in which the oily substance is applied directly to the cathode surface; a method in which the cathode is immersed in a container filled with the oily substance to attach the oily substance to the cathode surface; a method in which the oily substance is caused to float on the surface of an electrolyte solution, and then the cathode is immersed into the electrolyte solution from above to attach the oily substance to the cathode surface; and the like. Furthermore, the following method can also be used in which the oily substance is suspended in an electrolyte solution that contains the cathode, and the suspended electrolyte solution is stirred to cause the suspended oily substance to abut against the cathode surface and attached to the cathode surface. Also, in the case where the oily substance has such solubility that a small amount thereof can be dissolved in the electrolyte solution, even when the suspended oily substance does not come into direct contact with the electrode, the oily substance once dissolved in the electrolyte solution continuously adsorbs to the electrode surface, as a result of which the same advantageous effect as that in the case where the oily substance is attached to the cathode surface can be obtained.

The amount of oily substance attached to the cathode surface when producing the metal fiber is preferably 1 g/m$^2$ or more and 500 g/m$^2$ or less, more preferably 3 g/m$^2$ or more and 200 g/m$^2$ or less, and even more preferably 5 g/m$^2$ or more and 100 g/m$^2$ or less per unit surface area of the cathode.

Next, the slurry that contains the obtained metal fiber is left to stand to settle the metal fiber to produce a metal nonwoven fabric. To be more specific, the slurry that contains the deposited metal fiber is cast into a non-water permeable mold, and the mold is left to stand to deposit the metal fiber. The mold may have dimensions that are substantially the same as or larger than the dimensions of the intended metal nonwoven fabric. By adjusting the amount of slurry cast into the mold or the concentration of metal fiber contained in the slurry, it is possible to obtain a metal nonwoven fabric that has desired liquid permeability, size of voids in the metal nonwoven fabric, and porosity.

Alternatively, as another method, the metal nonwoven fabric may be produced by filtering a slurry that contains the metal fiber through a filter, followed by drying, and then removing the filter. Alternatively, as yet another method, the metal nonwoven fabric may also be produced by spraying a slurry in which the metal fiber is dispersed onto a substrate made of a metal or the like to form a coating, or by using a spin coater.

In the above-described coating forming method, by providing an electric magnetic field at the same time when the coating is formed, the structure of the metal nonwoven fabric can be controlled.

As the metal fiber described above, a metal fiber whose surface is covered with a substance other than metals may also be used. Alternatively, as the metal fiber described above, a metal fiber composed of a core portion made of a metal and a shell portion that is provided on a surface of the core portion and is made of a metal other than the metal that constitutes the core portion may also be used.

Alternatively, after a metal nonwoven fabric is produced, the metal nonwoven fabric may be covered with a substance other than metals. Alternatively, after a metal nonwoven fabric is produced, the metal nonwoven fabric may be covered with a metal different from the metal that constitutes the metal nonwoven fabric.

After the metal fiber is deposited in the mold, the supernatant liquid of the slurry is removed from the mold. As the method for removing the supernatant liquid of the slurry, for example, the following methods can be used: a method in which a centrifuge is used; a method in which the supernatant liquid is subjected to decantation; and a method in which the supernatant liquid is evaporated.

After the supernatant liquid of the slurry is removed from the mold, the deposited material remaining in the mold is dried under an atmospheric pressure or inert gas atmosphere. The deposited material is not completely dried in this step, and thus the deposited material is coexistent with a small amount of supernatant liquid. Also, the metal fiber in the deposited material is very thin and long, there are voids in the deposited material.

After that, where necessary, the deposited material can be pressed in the thickness direction using a pressing machine. Through this step, the thickness of the intended metal nonwoven fabric can be adjusted. Furthermore, by adjusting the pressure, time, temperature and the like used when pressing the deposited material in the thickness direction, it is possible to obtain a metal nonwoven fabric that has desired liquid permeability, size of voids in the metal nonwoven fabric, and porosity. When pressing the deposited material in the thickness direction, for example, the deposited material may be taken out of the mold, surrounded on all sides by a metal plate (spacer) that has the intended thickness, and pressed from above the metal plate. By adjusting the amount of slurry cast into the mold or the concentration of metal fiber contained in the slurry, it is possible to obtain a metal nonwoven fabric that has desired liquid permeability, size of voids in the metal nonwoven fabric, and porosity.

From the viewpoint of obtaining a metal nonwoven fabric that has desired liquid permeability, size of voids in the metal nonwoven fabric, and porosity, the pressure at which the deposited material is pressed is preferably 0.01 MPa or more and 50 MPa or less, more preferably 1 MPa or more and 30 MPa or less, and even more preferably 1 MPa or more and 20 MPa or less.

From the same viewpoint as described above, the time for which the deposited material is pressed is preferably 3 minutes or more and 5 hours or less, more preferably 10 minutes or more and 3 hours or less, and even more preferably 30 minutes or more and 2 hours or less.

The deposited material may be heated when pressing the deposited material. Alternatively, the deposited material may be pressed under a non-heating condition. The temperature at which the deposited material is heated is preferably 500°C or less, and more preferably 350°C or less from the viewpoint of preventing excessive fusing between metal fibers.

After the deposited material is dried or pressed in the thickness direction, where necessary, the deposited material is calcined under an argon, nitrogen, or hydrogen-containing atmosphere, without pressing, to cause metal fiber intersections to fuse in the deposited material, and obtain a metal nonwoven fabric. When fusing, if it is necessary to reduce the metal fiber surface, the deposited material is calcined under a hydrogen-containing atmosphere without pressing. The metal fiber is very thin and long, and thus the surface of the metal fiber in the deposited material is likely to be oxidized. For this reason, it is advantageous to calcine the deposited material to reduce the metal fiber surface. Also, when the metal fiber is obtained through the above-described electrolysis, by reductively calcining the deposited material, the advantage of at least a portion of the metal fiber in the deposited material easily fused to each other can also be obtained.

The time for which the deposited material is calcined is preferably 3 minutes or more and 24 hours or less, and more preferably 30 minutes or more and 5 hours or less from the viewpoint of efficiently reducing the surface oxide and fusing the metal fibers.

The temperature at which the deposited material is calcined is preferably 800°C or less, and more preferably 150°C or more and 500°C or less from the viewpoint of efficiently reducing the metal and causing the metal fibers to appropriately fuse each other.

The metal nonwoven fabric obtained in the above-described manner may be cut into a desired shape. A plurality of the obtained metal nonwoven fabrics may be stacked to form a stacked metal nonwoven fabric.

After the metal nonwoven fabric is formed, in addition to the heating process, the metal nonwoven fabric may be entirely plated with a metal as an electrode to cover the surface of the metal nonwoven fabric with a different type of metal or the same type of metal. In this way, the mechanical strength of the metal nonwoven fabric can be improved and the size of voids in the metal nonwoven fabric and the porosity can also be controlled.

With the metal nonwoven fabric production method described above, it is possible to produce a metal nonwoven fabric that has liquid permeability as a whole, and in which the reactant in the liquid can reach the surface of the metal fiber that constitutes the metal nonwoven fabric in a short time, and also has a reaction area where a reaction takes place immediately.

The metal fiber contained in the metal nonwoven fabric has a polycrystalline structure in which a plurality of crystals are connected in the lengthwise direction. Also, the crystals in the [110] orientation are unlikely to be preferentially oriented in the lengthwise direction. Furthermore, the crystals in the [111] orientation are likely to be preferentially oriented in the lengthwise direction or the crystal orientation direction is likely to be random. As described above, in the case where the metal fiber includes a core portion made of a metal and a metal other than the metal that constitutes the core portion is placed on the surface of the core portion, the metal other than the metal that constitutes the core portion may be or may not be oriented as described above.

The metal nonwoven fabric according to the present invention obtained using the above-described method can be used as an electrochemical material that utilizes the liquid permeability of the metal nonwoven fabric and the physical and chemical properties of the metal fiber. For example, the metal nonwoven fabric according to the present invention may be cut into a desired size and used as an electrode. Alternatively, the metal nonwoven fabric according to the present invention may be combined with a fibrous body or particulate body made of a material that is the same as or different from that used in the metal nonwoven fabric to form an electrode. In the electrode formed using the metal nonwoven fabric, there are more voids as compared with, for example, an electrode formed using a metal plate, and thus the reactivity with the liquid is improved. Accordingly, when the metal nonwoven fabric according to the present invention is used as an electrode, the liquid permeability is improved, the reactant can reach the surface of the metal fiber that constitutes the metal nonwoven fabric in a shorter time, and thus even better reactivity can be obtained as compared with conventional porous materials commonly used as the electrode material reactive with a liquid.

Accordingly, the metal nonwoven fabric according to the present invention can be used in, for example, a biosensor electrode, a water electrolysis electrode, a carbon dioxide decomposition electrode, an organic substance synthesis electrode, a harmful substance decomposition electrode, a valuable material synthesis electrode, a valuable material collecting electrode, various types of battery current collectors, and the like. Out of these, the electrode formed using the metal nonwoven fabric can quickly react with a small amount of liquid, and thus is preferably used in a biosensor electrode.

Also, when the metal nonwoven fabric according to the present invention obtained using the above-described method is used as a selective adsorbent of a chemical substance, the metal nonwoven fabric can also favorably work, without applying a current from the outside, even in a reaction system in which a reaction takes place upon contact between the reactant in the liquid and the metal fiber contained in the metal nonwoven fabric or a component treated on the metal fiber surface. Specifically, it is generally known that, when an aqueous solution in which hydrogen sulfide is dissolved is brought into contact with the metal surface of copper, silver, gold, nickel, lead, palladium, platinum, cobalt, tin, iron, zinc, or bismuth, sulfide ions contained in the aqueous solution react with the metal surface to generate a sulfide, and thus harmful sulfide ions can be removed from the aqueous solution. When the metal nonwoven fabric according to the present invention that contains a metal to be reacted with the aqueous solution is used, the liquid permeability is improved and the reactant contained in the permeated liquid easily reaches the surface of the metal fiber that constitutes the metal nonwoven fabric, and thus sulfide ions can be more efficiently removed. With the metal nonwoven fabric according to the present invention, it is also possible to efficiently remove, for example, mercury present in the aqueous solution in the same manner. Even with an article that contains, in part, the metal nonwoven fabric according to the present invention, the same advantageous effect can be obtained.

Accordingly, the metal nonwoven fabric according to the present invention can also be used in, for example, a filter for removing harmful substance from waste water, or the like.

It is also known that the growth of bacteria and viruses in liquids and gases can be suppressed by the antimicrobial effect of metals such as copper. Accordingly, by using a metal that has the antimicrobial effect as one of the constituent materials of the metal nonwoven fabric according to the present invention, the frequency of contact of reactants such as bacteria and viruses with the metal fiber surface can be increased, and thus the efficiency of the antimicrobial effect can be enhanced.

Accordingly, the metal nonwoven fabric according to the present invention can also be used in, for example, a filter for killing bacteria and viruses contained in waste liquids from medical institutions without heating, a filter used in an air purifier for removing airborne infection viruses, and the like.

Also, based on the same mechanism, for example, the metal nonwoven fabric according to the present invention may also be used in a heat transfer portion of a heat exchanger that uses a liquid as a medium. In this case, the efficiency of heat exchange can be enhanced.

Accordingly, the metal nonwoven fabric according to the present invention can also be used in, for example, an effective water-cooling type chiller for electronic equipment, and the like.

The present invention has been described above based on a preferred embodiment thereof, but the present invention is not limited to the embodiment given above.

The above-described embodiment of the present invention encompasses the following technical ideas.

[1] A metal nonwoven fabric that contains a metal fiber and has liquid permeability, wherein the metal fiber has an average fiber diameter of 20 nm or more and 10 $\mu$m or less, and the metal nonwoven fabric has a void distribution peak top diameter measured according to mercury porosimetry of 30 $\mu$m or less.

[2] The metal nonwoven fabric as set forth in clause [1], wherein the void distribution peak top diameter measured according to mercury porosimetry is 0.01 $\mu$m or more.

[3] The metal nonwoven fabric as set forth in clause [1] or [2], wherein an arithmetic average value of values of a ratio X/Y of crystals that are present at three boundary regions formed by dividing a length of the metal fiber that constitutes the metal nonwoven fabric into four equal parts in the extension direction of the metal fiber is 4 or less, the ratio X/Y being a ratio of X relative to Y, wherein X represents a length of a crystal of a metal that constitutes the metal fiber in an extension direction of the metal fiber, and Y represents a length of the crystal in a direction perpendicular to the extension direction of the metal fiber.

[4] The metal nonwoven fabric as set forth in any one of clauses [1] to [3], wherein the metal fiber has an average length of 0.5 $\mu$m or more and 5000 $\mu$m or less.

[5] The metal nonwoven fabric as set forth in any one of clauses [1] to [4], wherein the metal nonwoven fabric has an average thickness of 3 $\mu$m or more.

[6] The metal nonwoven fabric as set forth in any one of clauses [1] to [5], wherein the metal nonwoven fabric has a specific surface area of 0.02 $m^2$/g or more and 22 $m^2$/g or less.

[7] The metal nonwoven fabric as set forth in any one of clauses [1] to [6], wherein a metal that constitutes the metal fiber includes any one of copper, silver, gold, nickel, lead, palladium, platinum, cobalt, tin, iron, zinc, bismuth, and alloys that contain these metals.

[8] The metal nonwoven fabric as set forth in any one of clauses [1] to [7], wherein a surface of the metal fiber is covered with a substance other than metals.

[9] The metal nonwoven fabric as set forth in any one of clauses [1] to [8], wherein the metal fiber includes: a core portion made of a metal; and a shell portion that is provided on a surface of the core portion and is made of a metal other than the metal that constitutes the core portion.

[10] An electrode including the metal nonwoven fabric as set forth in any one of clauses [1] to [9].

Examples

Hereinafter, the present invention will be described in further detail based on examples. However, the scope of the present invention is not limited to the examples given below. Unless otherwise stated, the percent sign "%" used herein means "mass%".

Example 1

In this example, a metal nonwoven fabric made of copper was produced.

An electrolyte solution was prepared using copper sulfate and sulfuric acid such that the concentration of copper ions was 40 g/L and the concentration of free sulfuric acid was 19.6 g/L, and the electrolyte solution in an amount of 800 mL was placed in an electrolytic vessel with a width of 10 cm, a depth of 8 cm, and a height of 12 cm (with a volume of about 1000 mL), and then stirred. The temperature of the electrolyte solution was set to 40°C.

A copper plate with a size of 8 cm ×8 cm was used as a cathode. Oleic acid was uniformly applied to the surface of the cathode. The amount of oleic acid applied was set to 7 g/m$^2$. A copper plate with a size of 8 cm ×8 cm was used as an anode. The cathode and the anode were hanged in the electrolytic vessel with a spacing between the cathode and the anode of 8 cm.

Electrolysis was performed for 30 minutes by adjusting the current density to 313 A/m$^2$. Through this, fibrous copper was electrodeposited on the cathode surface. The electrodeposited fibrous copper was deposited at a low degree of aggregation on the electrode, and thus the fibrous copper was stripped off from the electrode, and dispersed in 2-propanol to prepare a slurry.

2.34 mL of the slurry (with a fibrous copper concentration of 100 g/L) was cast into a mold (with a length of 50 mm, a width of 12 mm, and a height of 15 mm) whose bottom was a Ti plate, and the mold was left to stand for 1 hour at room temperature (25°C) to deposit a deposition material.

The solvent was removed from the mold by removing the supernatant liquid and causing the remaining organic solvent to evaporate.

The deposited material remaining in the mold was dried under a vacuum atmosphere at room temperature (25°C) for 12 hours.

After that, the deposited material was calcined under a hydrogen-containing atmosphere (3 vol% of $H_2$ and a remainder of $N_2$) without pressing to obtain a metal nonwoven fabric. The calcination was performed at 350°C for 1.5 hours. The obtained metal nonwoven fabric was observed using an SEM, and the metal fiber constituting the metal nonwoven fabric was observed. Each end portion of the metal fiber had a tapered shape and was curved.

Comparative Example 1

A Cu (copper) metal porous body MF-30 available from Nagamine Manufacturing Co., Ltd. was used as the metal nonwoven fabric of Comparative Example 1. The Cu metal porous body MF-30 was observed using an SEM, and found to be a spongy porous body.

Comparative Example 2

A Cu (copper) metal porous body MF-80A available from Nagamine Manufacturing Co., Ltd. was used as the metal nonwoven fabric of Comparative Example 2. The Cu metal porous body MF-80A was observed using an SEM, and found to be a spongy porous body.

Example 2

0.78 mL of the same slurry as that prepared in Example 1 was placed in the same mold whose bottom was a Ti plate as that used in Example 1. Then, in the same manner as in Example 1, the mold containing the deposited material was dried under a vacuum atmosphere, and the deposited material was taken out of the mold. The deposited material surrounded on all sides by a copper plate with a thickness of 100 μm, and pressed in the thickness direction at 20 MPa from above the plate. The deposited material was pressed for 0.5 hours at room temperature (25°C). A metal nonwoven fabric was obtained in the same manner as in Example 1, except for the above-described changes.

Example 3

An electrolyte solution was prepared using copper sulfate and sulfuric acid such that the concentration of copper ions was 10 g/L and the concentration of free sulfuric acid was 5 g/L. Electricity was caused to flow through the electrolyte solution for 30 minutes by setting the current density to 156 A/m$^2$. Through this, fibrous copper was electrodeposited on the cathode surface. The fibrous copper was dispersed in 2-propanol to prepare a slurry. 4.54 mL of the slurry (at a concentration of 27 g/L) was filtered using a 45-mm silica filter (with an inner diameter of 35 mm). The filter was removed, with the slurry being attached, and then, the remaining solvent was evaporated. After that, the deposited material was dried under a vacuum atmosphere and calcined under a hydrogen-containing atmosphere in the same manner as in Example 1. Finally, the silica filter was stripped off from the molded copper metal nonwoven fabric.

Comparative Example 3

As the metal nonwoven fabric of Comparative Example 3, a copper fiber sheet available from Tomoegawa Corporation was used. The copper fiber sheet was observed using an SEM, and found to be a porous body made of copper fiber. A piece of adhesive tape was attached, and thus the copper fiber sheet was immersed in ethanol to separate the piece of adhesive tape from the copper fiber sheet.

Example 4

An electrolyte solution was prepared using copper sulfate and sulfuric acid such that the concentration of copper ions was 40 g/L and the concentration of free sulfuric acid was 19.6 g/L, and the electrolyte solution in an amount of 800 mL was placed in an electrolytic vessel with a width of 10 cm, a depth of 8 cm, and a height of 12 cm (with a volume of about 1000 mL), and then stirred. 30 mL of oleic acid was added to the electrolyte solution instead of applying oleic acid to the cathode surface. The electrolyte solution was stirred to suspend oleic acid in the entire electrolyte solution. The temperature of the electrolyte solution was set to 40°C.
A metal nonwoven fabric was obtained in the same manner as in Example 1, except for the above-described changes. The obtained metal nonwoven fabric was observed using an SEM, and the metal fiber constituting the metal nonwoven fabric was observed. Each end portion of the metal fiber had a tapered shape and was curved.

Evaluation 1

For each of the samples obtained in Examples 1 to 4 and the sample prepared for Comparative Example 3, the average fiber diameter and average length of the metal fiber constituting the sample were obtained using the above-described method. The samples of Comparative Examples 1 and 2 had a spongy porous body (hereinafter also referred to as "spongy metal"), and thus measurement was omitted.
Also, for each of the samples obtained in Examples 1 to 4, the value of the ratio X/Y of the crystals of the metal that constitutes the metal fiber was calculated using the above-described method. For the samples of Comparative Examples 1 to 3, the value of the ratio X/Y was not calculated. The reason is that the samples of Comparative Examples 1 and 2 were spongy metals, and the value of the ratio X/Y does not provide an indication of the crystal shape. The sample of Comparative Example 3 has an average fiber diameter as large as 20 $\mu$m, and thus as with Comparative Examples 1 and 2, the value of the ratio X/Y does not provide an indication of the crystal shape.
Also, for each of the samples obtained in Examples 1 to 4 and the samples obtained in Comparative Examples 1 to 3, the size of voids in the metal nonwoven fabric constituting the sample or the size of voids in the spongy metal constituting the sample was determined by measuring the void distribution peak top diameter measured according to mercury porosimetry using the above-described method (in the case of voids having a diameter of 30 $\mu$m or less) or measuring the average sphere-equivalent diameter of pores formed by dividing the void through image analysis in X-ray CT measurement using the above-described method (in the case of voids having a diameter of greater than 30 $\mu$m). Also, porosity was obtained using the above-described method.
Furthermore, for each of the samples obtained in Examples 1 to 4 and the samples obtained in Comparative Examples 1 to 3, the average thickness, apparent density, and specific surface area of the sample were obtained using the above-described method. In the case of a metal nonwoven fabric with a specific surface area of 0.1 m$^2$/g or more, as described above, the specific surface area was measured using a specific surface area / pore size distribution measuring device BELSORP-max available from Bel Japan, Inc. based on the krypton gas adsorption-BET multipoint method. In the case of a metal nonwoven fabric with a specific surface area of less than 0.1 m$^2$/g, the specific surface area was measured by performing X-ray CT measurement using a nanofocus X-ray CT scanner SKYSCAN AN2214 available from Bruker Corporation. Also, the apparent density of the sample was obtained from the volume V1 and mass of the sample using the above-described method.

These results are shown in Table 1 shown below. For the sample obtained in Comparative Example 3, the metal fiber length was too long so that it was not possible to measure the metal fiber length using the above-described method. Accordingly, in Table 1, "continuous" is written.

Evaluation 2

For each of the samples obtained in Examples 1 to 4 and Comparative Examples 1 to 3, the liquid permeability of the sample was evaluated based on the above-described method.

The amount of water absorbed per volume based on the outer contour dimensions of each sample in dry state was calculated. When the calculated value was 0.4 mL/cm$^3$ or more, the sample was determined as being liquid permeable. When the calculated value was less than 0.4 mL/cm$^3$, the sample was determined as being liquid impermeable. The results are shown in Table 1.

Before the measurement, each of commercially available samples used as the samples of Comparative Examples 1 to 3 were immersed in a 0.1 mol/L sodium hydroxide aqueous solution for 5 minutes, and then in an aqueous solution of nitric acid diluted fourfold for 3 minutes, and the surface of the sample was cleaned.

Evaluation 3

Evaluation was performed to check the reachability of the reactant to the metal fiber that constitutes each of the samples obtained in Examples 1 to 4 and Comparative Examples 1 to 3 or the metal fiber surface thereof. Using each of the samples obtained in Examples 1 to 4 and Comparative Examples 1 to 3, the amount of electricity required for oxidation of glucose in the aqueous solution in electrolysis (the amount of electricity detected electrochemically) (mC) was determined using the method described below. The results are shown in Table 1.

Measurement of Amount of Electricity Required for Oxidation of Glucose

Each of the samples obtained in Examples 1 to 4 and Comparative Examples 1 to 3 was cut into a piece with a size of 5 × 20 mm, and placed on a 48 × 30-mm plastic plate on which a glass fiber filter (GA-100 available from ADVANTEC, Ltd.) was placed. The glass fiber filter was cut into the size of the plastic plate. Each of commercially available samples used as the samples of Comparative Examples 1 to 3 was immersed in a 1 mol/L sodium hydroxide aqueous solution for 5 minutes before measurement. After that, the sample was immersed in an aqueous solution of nitric acid diluted fourfold for 3 minutes, and the surface of the sample was cleaned. The samples obtained in Examples 1, 2, and 4 were also cleaned in the same manner before measurement, except that the immersion time in an aqueous solution of nitric acid diluted fourfold was changed to 15 seconds. The sample obtained in Example 3 was also cleaned in the same manner before measurement, except that the sample was not immersed in an aqueous solution of nitric acid diluted fourfold. These samples were used as detection electrodes for detecting glucose. The average thickness of a cut piece of each sample (the metal nonwoven fabric or the spongy metal) is shown in Table 1.

A Pt wire with a diameter of about 0.5 mm was placed with a spacing of about 4.5 mm from the side edge of the detection electrode in the lengthwise direction of the detection electrode, and used as the counter electrode.

A piece of silicone rubber that had a size of 48 mm × 25 mm and a thickness of 1.5 mm and also had a 15 mm × 10 mm elliptic hole and a plastic plate that had the same size as the piece of silicone rubber and a thickness of 0.8 mm and also had a hole having the same size as that formed in the piece of silicone rubber were placed, with the side edge (on the side where the counter electrode was placed) of the sample lying on a straight line corresponding to the short diameter of the elliptic hole, and then clipped.

A silver/silver chloride electrode that had an outer diameter of 3 mmφ and a ceramic plug embedded at its tip end as the standard electrode was placed between the detection electrode and the counter electrode at a position closer to the detection electrode. The tip end of the standard electrode lightly contacted the surface of the glass fiber filter. A crocodile clip was attached to a portion protruding from the plastic plate used as a cover plate so as to electrically connect to the detection electrode.

Before detection, 1000 μL of a 0.1 mol/L sodium hydroxide aqueous solution was added to the detection electrode, the standard electrode, and the silver/silver chloride electrode to wet the three electrodes, and then electrically conducted.

Next, the detection electrode was scanned by performing an operation of applying voltage in a range of -0.2 to 0.8 V (versus the silver/silver chloride standard electrode) at 50 mV/s five times to form an oxide film on the surface of copper in the detection electrode. If the difference between the current value obtained at the operation performed last at a potential of 0.8 V and the current value obtained at the operation performed before the last was greater than 0.05 mA even after repeating the operation five times, the operation was further repeated. The operation was repeated until the difference between the current value obtained at the operation performed last at a potential of 0.8 V and the current value obtained at the operation performed before the last was less than 0.05 mA. After that, a string of paper made by twisting a sheet of JK Wiper (available from Nippon Paper Crecia Co., Ltd.) was applied to the upper surface of the detection electrode to absorb the solution seeping out of the detection electrode. The underlying glass fiber filter remained wet.

Next, electricity was applied such that the potential of the detection electrode reached 0.55 V (versus the silver/silver chloride standard electrode). Then, 20 $\mu$L of a 0.1 mol/L sodium hydroxide aqueous solution was added as an auxiliary electrolyte solution. After that, a 0.1 mol/L sodium hydroxide aqueous solution containing a predetermined amount of glucose (5440 $\mu$mol/L) dissolved therein was added dropwise onto the detection electrode using a micropipette. In the case of the detection electrode having a thickness of around 1 mm as in Examples 1 and 4 and Comparative Examples 1 and 2, 20 $\mu$L of the sodium hydroxide aqueous solution was added onto the detection electrode. In the case of the detection electrode having a thickness of around 0.1 mm as in Examples 2 and 3 and Comparative Example 3, 2 $\mu$L of the sodium hydroxide aqueous solution was added onto the detection electrode.

As glucose permeates into the detection electrode, a catalytic reaction takes place between glucose and copper oxide present on the detection electrode surface to oxidize glucose, and an oxidation current flows across the detection electrode and the counter electrode. Accordingly, the amount of electricity required for oxidation of glucose can be detected.

Changes in the oxidation current flowing immediately after adding dropwise the sodium hydroxide aqueous solution containing glucose dissolved therein over time were monitored. The amount of electricity detected in 30 seconds after adding dropwise the sodium hydroxide aqueous solution containing glucose dissolved therein was obtained. When 20 $\mu$L of the sodium hydroxide aqueous solution was added onto the detection electrode with a thickness of around 1 mm in Examples 1 and 4 and Comparative Examples 1 and 2, the peak of the oxidation current lasted even 30 seconds after adding dropwise the sodium hydroxide aqueous solution, but the integration of the amount of electricity was terminated 30 seconds after adding dropwise the sodium hydroxide aqueous solution.

[Table 1]

| | Form | Physical properties of metal fiber | | | Physical properties of metal nonwoven fabric | | | | | Evaluation result | |
|---|---|---|---|---|---|---|---|---|---|---|---|
| | | Average fiber diameter ($\mu$m) | Average length ($\mu$m) | X/Y | Void size ($\mu$m) | Porosity (%) | Average thickness (mm) | Apparent density (g/cm$^3$) | Specific surface area (m$^2$/g) | Liquid permeability | Amount of electricity detected electrochemically (mC) |
| Example 1 | Metal fiber | 1.8 | 72 | 1.8 | 17 | 97 | 1.1 | 0.30 | 0.38 | Liquid permeable | 20 |
| Example 4 | Metal fiber | 4.8 | 68 | 2.3 | 18 | 89 | 1.0 | 0.99 | 0.28 | Liquid permeable | 23 |
| Comparative Example 1 | Spongy | - | - | - | 380 | 86 | 1.0 | 1.4 | 0.0041 | Liquid impermeable | 10 |
| Comparative Example 2 | Spongy | - | - | - | 260 | 87 | 1.0 | 1.2 | 0.0038 | Liquid impermeable | 12 |
| Example 2 | Metal fiber | 1.5 | 75 | 1.73 | 8 | 87 | 0.11 | 1.2 | 0.44 | Liquid permeable | 11 |
| Example 3 | Metal fiber | 0.24 | 5.4 | 0.86 | 1.4 | 92 | 0.14 | 0.75 | 1.3 | Liquid permeable | 8.9 |
| Comparative Example 3 | Metal fiber | 20 | Continuous | - | 38 | 72 | 0.12 | 2.4 | 0.014 | Liquid impermeable | 4.5 |

As can be clearly seen from Table 1, when a comparison is made between Examples 1 and 4 and Comparative Examples 1 and 2 in which the average thickness was substantially the same value, the metal nonwoven fabrics obtained in Examples 1 and 4 exhibited higher liquid permeability, and the amount of electricity detected electrochemically was significantly increased as compared with the samples of Comparative Examples 1 and 2. When a comparison is made between Examples 2 and 3 and Comparative Example 3 in which the average thickness was substantially the same value, the metal nonwoven fabrics obtained in Examples 2 and 3 exhibited higher liquid permeability, and the amount of electricity detected electrochemically was significantly increased as compared with the sample of Comparative Example 3. It can be seen, from the above-described fact, that the metal nonwoven fabrics obtained in Examples 1 to 4 have higher liquid permeability than the samples of Comparative Examples 1 to 3. Furthermore, unlike the samples of Comparative Examples 1 to 3, the metal nonwoven fabrics obtained in Examples 1 to 4 were made of thin and long metal fibers. With this configuration, the reactant in the liquid reached the surface of the metal fiber constituting the metal nonwoven fabric in a short time, and a desired reaction efficiently proceeded. Accordingly, it can be seen that the metal nonwoven fabrics obtained in Examples 1 to 4 have better electrode performance than the samples of Comparative Examples 1 to 3.

Industrial Applicability

According to the present invention, it is possible to provide a metal nonwoven fabric that has improved liquid permeability, and also has the function of causing a reactant contained in a permeated liquid to easily reach the surface of the metal fiber that constitutes the metal nonwoven fabric.

**Claims**

1. A metal nonwoven fabric that contains a metal fiber and has liquid permeability,

   wherein the metal fiber has an average fiber diameter of 20 nm or more and 10 $\mu$m or less, and
   the metal nonwoven fabric has a void distribution peak top diameter measured according to mercury porosimetry of 30 $\mu$m or less.

2. The metal nonwoven fabric according to claim 1,
   wherein the void distribution peak top diameter measured according to mercury porosimetry is 0.01 $\mu$m or more.

3. The metal nonwoven fabric according to claim 1,

   wherein an arithmetic average value of values of a ratio X/Y of crystals that are present at three boundary regions formed by dividing a length of the metal fiber that constitutes the metal nonwoven fabric into four equal parts in the extension direction of the metal fiber is 4 or less, the ratio X/Y being a ratio of X relative to Y,
   wherein X represents a length of a crystal of a metal that constitutes the metal fiber in an extension direction of the metal fiber, and
   Y represents a length of the crystal in a direction perpendicular to the extension direction of the metal fiber.

4. The metal nonwoven fabric according to claim 1,
   wherein the metal fiber has an average length of 0.5 $\mu$m or more and 5000 $\mu$m or less.

5. The metal nonwoven fabric according to claim 1,
   wherein the metal nonwoven fabric has an average thickness of 3 $\mu$m or more.

6. The metal nonwoven fabric according to claim 1,
   wherein the metal nonwoven fabric has a specific surface area of 0.02 m$^2$/g or more and 22 m$^2$/g or less.

7. The metal nonwoven fabric according to claim 1,
   wherein a metal that constitutes the metal fiber includes any one of copper, silver, gold, nickel, lead, palladium, platinum, cobalt, tin, iron, zinc, bismuth, and alloys that contain these metals.

8. The metal nonwoven fabric according to claim 1,
   wherein a surface of the metal fiber is covered with a substance other than metals.

9. The metal nonwoven fabric according to claim 1,

wherein the metal fiber includes: a core portion made of a metal; and a shell portion that is provided on a surface of the core portion and is made of a metal other than the metal that constitutes the core portion.

10. An electrode comprising the metal nonwoven fabric according to claim 1.

## INTERNATIONAL SEARCH REPORT

| International application No. |
| --- |
| **PCT/JP2023/031176** |

| | |
| --- | --- |
| **A. CLASSIFICATION OF SUBJECT MATTER** | |

***D04H 1/4234***(2012.01)i; ***C25B 11/031***(2021.01)i; ***C25B 11/042***(2021.01)i; ***C25B 11/046***(2021.01)i
FI:  D04H1/4234; C25B11/031; C25B11/042; C25B11/046

According to International Patent Classification (IPC) or to both national classification and IPC

| | |
| --- | --- |
| **B. FIELDS SEARCHED** | |

Minimum documentation searched (classification system followed by classification symbols)

D04H1/00-18/04; C25B11/00-11/097; D21B1/00-1/38; D21C1/00-11/14; D21D1/00-99/00; D21F1/00-13/12; D21G1/00-9/00; D21H11/00-27/42; D21J1/00-7/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| | |
| --- | --- |
| **C. DOCUMENTS CONSIDERED TO BE RELEVANT** | |

| Category* | Citation of document, with indication, where appropriate, of the relevant passages | Relevant to claim No. |
| --- | --- | --- |
| X | WO 2014/147885 A1 (KYOTO UNIVERSITY) 25 September 2014 (2014-09-25) claims, paragraphs [0046], [0053]-[0069], example 1, fig. 2 | 1-10 |
| A | JP 55-163248 A (NEGISHI, Edami) 19 December 1980 (1980-12-19) claims | 1-10 |
| A | WO 2018/131658 A1 (TOMOEGAWA CO., LTD.) 19 July 2018 (2018-07-19) claims | 1-10 |

☐ Further documents are listed in the continuation of Box C.    ☑ See patent family annex.

| | | |
| --- | --- | --- |
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
| --- | --- |
| **24 October 2023** | **07 November 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/031176**

| Patent document cited in search report | Publication date (day/month/year) | Patent family member(s) | Publication date (day/month/year) |
|---|---|---|---|
| WO 2014/147885 A1 | 25 September 2014 | (Family: none) | |
| JP 55-163248 A | 19 December 1980 | (Family: none) | |
| WO 2018/131658 A1 | 19 July 2018 | EP 3508631 A1 claims<br>US 2019/0211485 A1<br>CA 3037831 A<br>CN 109891016 A<br>TW 201833408 A | |

Form PCT/ISA/210 (patent family annex) (January 2015)

23

## REFERENCES CITED IN THE DESCRIPTION

**Patent documents cited in the description**

- US 20190305322 A1

**Non-patent literature cited in the description**

- **F. YANG et al.** *Adv. Energy Mater*, 2020, vol. 10, 20011174